# EUROPEAN PATENT SPECIFICATION

(11) **EP 3 816 015 B1**
(45) Date of publication and mention of the grant of the patent: **21.06.2023**
(21) Application number: 20205697.4
(22) Date of filing: 04.11.2020
(51) Int. Cl.: B62B 9/26

(54) **MULTI-BASKET BABY CARRIAGE**
KINDERWAGEN MIT MEHREREN KÖRBEN
POUSSETTE AVEC PANIERS MULTIPLES

(30) Priority: 04.11.2019 CN 201921888677 U
(43) Date of publication of application: 05.05.2021
(73) Proprietor: Wonderland Switzerland AG, 6312 Steinhausen (CH)
(72) Inventor: WU, HaiTao, Dongguan,, Guangdong 523648 (CN); WANG, Er-Xue, Dongguan,, Guangdong 523648 (CN); CHEN, Yanmin, Dongguan,, Guangdong 523648 (CN)
(74) Representative: Hoefer & Partner Patentanwälte mbB

(56) References cited:
- EP-A1- 2 495 153
- WO-A1-2019/168339
- CN-U- 202 463 878
- GB-A- 1 258 925
- US-A1- 2002 093 160

## Description

### Field of the Invention

The present invention relates to a baby carriage, particularly a multi-basket baby carriage.

### Background of the Invention

In the existing strollers, there is usually a basket under the seat to facilitate the carrying of objects. The basket may be used to store baby's daily necessities, such as tissues, milk powder, diapers, etc., as well as food, such as fruits, vegetables and so on. When a guardian pushes the stroller with a child seated therein to a market to buy food, the meat and vegetables may be placed in the basket of the stroller. There is no need to carry a shopping trolley, so it is very convenient to carry.

However, the stroller has only one basket. When baby's daily necessities are placed together with raw meat and vegetables, it is easy to cause mutual contamination and it is not hygienic in use. Furthermore, too many objects put together will cause confusion, such that it is not easy to find a required object and it is inconvenient in use.

EP 2 495153 A1 discloses a stroller including a seat frame having a seat portion attached thereto; front-leg frames extending downward from the seat frame toward the front, and having front wheels attached to their lower ends, respectively; rear-leg frames extending downward from the seat frame toward the rear, and having rear wheels attached to their lower ends, respectively; and a storage portion provided in a space below the seat portion. The storage portion includes a bottom wall, and a peripheral wall standing upward from a peripheral edge of the bottom wall. A rear wall portion, which forms a part on a side of a rear end in the peripheral wall, is capable of being shifted between a standing position and an open position where the rear wall portion is tilted so as to protrude rearward from the rear end of the bottom wall in a substantially horizontal direction.

US 2002/093160 A1 discloses a juvenile stroller including a stroller frame and a cooler configured to store items in a cooled environment. The cooler is attachable to and detachable from a basket support frame included in the stroller frame. Clips included in the cooler can be coupled to anchor mounts on the basket support frame to support the cooler in a traveling position alongside the rear wall of a storage basket coupled to the basket support frame.

CN 202 463 878 U discloses a multifunctional baby carriage, which comprises a foldable frame and a storage basket, wherein the storage basket is fixedly arranged at the bottom part of the frame; the frame is lambdoidal; the middle part of the frame is symmetrically provided with a pair of first mounting parts; the first mounting parts are matched with a connecting seat to form a front seat which can be provided with any one of a seat, a shopping basket and an automobile seat; the tail end of the storage basket is symmetrically provided with a pair of second mounting parts; and the second mounting parts are matched with an axle body to form a rear seat which can be provided with any one of the seat, the shopping basket, the automobile seat and a riser plate.

GB 1 258 925 A discloses a chassis for a perambulator, push chair or carrying cot transporter having a rectangular drawer or tray slidable on longitudinal runners mounted on vertical members through which pass axles for wheels on the chassis the drawer or tray being formed with a flange along each of the longitudinal sides and with beaded over handles along the ends for drawing the tray or drawer in either direction and with a transverse partition wall to divide the tray or drawer into two compartments.

### Summary of the Invention

The present invention aims at providing a multi-basket baby carriage with a multi-basket structure capable of storing different types of objects separately, such that the multi-basket baby carriage is more hygienic and convenient in use, thereby resolving the aforesaid problems.

This is achieved by a multi-basket baby carriage according to claim 1. The dependent claims pertain to corresponding further developments and improvements.

As will be seen more clearly from the detailed description following below, the claimed multi-basket baby carriage includes a carriage frame and at least two basket bodies. At least two basket areas are arranged under a seat body of the carriage frame. The at least two basket bodies are disposed on the at least two basket areas correspondingly and connected to the carriage frame.

At least two basket areas are arranged on the carriage frame of the invention and at least two basket bodies are disposed on the basket areas correspondingly, such that the carriage frame has a plurality of independent baskets. Accordingly, one of the baskets may be used to store baby's daily necessities and others may be used to store food, such as fruits, vegetables and so on, such that the baby's daily necessities can be separated from other objects, so as to avoid mutual contamination and improve hygiene. Furthermore, since different types of objects are placed separately, a required object can be quickly found during use and the convenience of use can be improved.

The at least two basket bodies includes a first basket body and a second basket body arranged in front and rear respectively, the at least two basket areas includes a first basket area and a second basket area, the first basket body is disposed on the first basket area, and the second basket body is disposed on the second basket area.

The carriage frame has two seat tubes on left and right sides of the seat body, a front side of the carriage frame has a first support tube disposed transversely, and the first basket body is connected to the first support tube and preferably to the seat tube. The arrangement of the first support tube and the seat tube can support and position the first basket body to ensure the reliability and stability for the load-bearing of the first basket body.

Preferably, the first basket body is hung on the first support tube.

Preferably, a rear side of the carriage frame has a second support tube and the second basket body is connected to the second support tube. The arrangement of the second support tube can support and position the second basket body to ensure the reliability and stability for the load-bearing of the second basket body.

Preferably, the second support tube is a U-shaped structure, such that the second basket body can obtain the maximum volume and the load-bearing of the second basket body can be more stable.

Preferably, the second basket body is hung on the second support tube.

Preferably, at least one of the first basket body and the second basket body is surrounded by a seat cloth or a mesh fabric.

Preferably, an access opening of the first basket body is arranged on a front side. Since an upper side of the first basket body is completely covered by the seat cloth, the aforesaid arrangement can facilitate a user to take and place objects and improve the convenience of the first basket body in use.

Preferably, the first basket body includes a connecting member for opening or closing the access opening of the first basket body. The arrangement of the connecting member can prevent objects from falling out of the access opening.

### Brief Description of the Drawings

In the following, the invention is further illustrated by way of example, taking reference to the accompanying drawings thereof:
FIG. 1 is a perspective view illustrating a multi-basket baby carriage of a first embodiment of the invention,
FIG. 2 is a side view illustrating a multi-basket baby carriage of a first embodiment of the invention, and
FIG. 3 is a bottom view illustrating a multi-basket baby carriage of a first embodiment of the invention.

### Detailed Description

In order to explain the disclosure, structural features, and achieved effects in detail, the invention will be further described with the embodiments and drawings in the following.

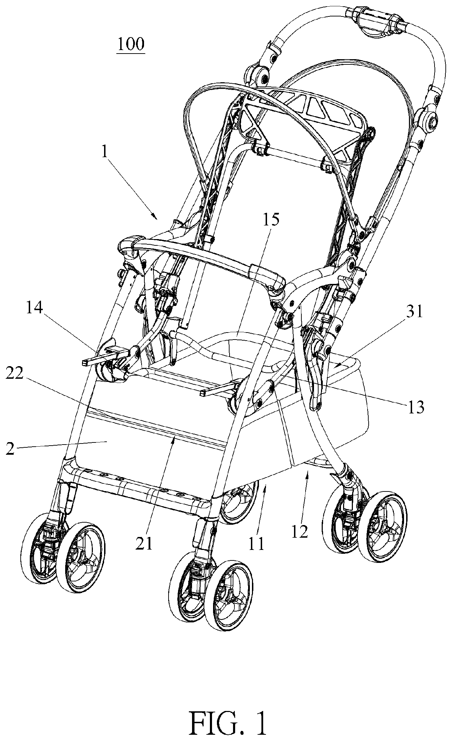

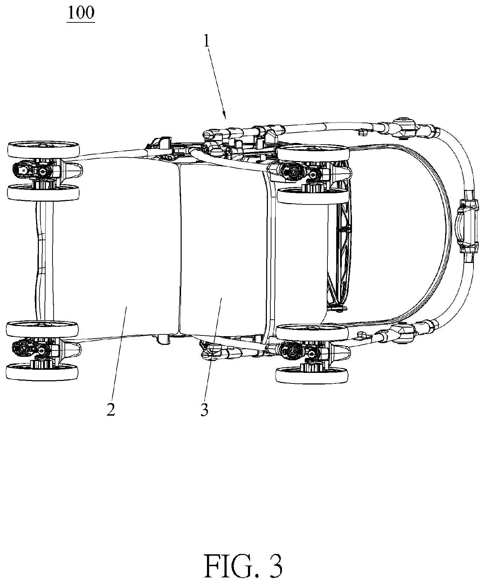

As shown in FIGs. 1 to 3, a multi-basket baby carriage 100 of the invention includes a carriage frame 1 and at least two basket bodies. At least two basket areas are arranged under a seat body of the carriage frame 1. The basket bodies are disposed on the basket areas correspondingly and connected to the carriage frame 1. Specifically, the basket bodies of this embodiment includes a first basket body 2 and a second basket body 3 arranged in front and rear respectively, and the basket areas of this embodiment includes a first basket area 11 and a second basket area 12, wherein the first basket body 2 is disposed on the first basket area 11 and the second basket body 3 is disposed on the second basket area 12.

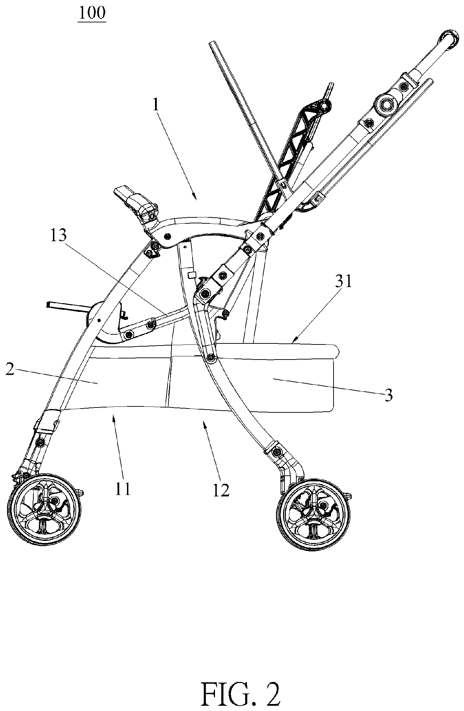

Referring to FIGs. 1 and 2, the carriage frame 1 has two seat tubes 13 on left and right sides of the seat body and a front side of the carriage frame 1 has a first support tube 14 disposed transversely. The first support tube 14 is a lower leg rest support tube. The first basket body 2 is connected to at least one of the first support tube 14 and the seat tube 13. Specifically, the first basket body 2 may be independently connected to the first support tube 14 or may be independently connected to the seat tubes 13 on left and right sides. In this embodiment, the first basket body 2 is connected to the first support tube 14 and the seat tube 13 simultaneously. A front side of an upper edge of the first basket body 2 is hung on the first support tube 14. The arrangement of the first support tube 14 and the seat tube 13 can support and position the first basket body 2 to ensure the reliability and stability for the load-bearing of the first basket body 2.

Referring to FIGs. 1 and 2, a rear side of the carriage frame 1 has a second support tube 15 and the second basket body 3 is connected to the second support tube 15. Specifically, the second basket body 3 is hung on the second support tube 15. The arrangement of the second support tube 15 can support and position the second basket body 3 to ensure the reliability and stability for the load-bearing of the second basket body 3. The second support tube 15 is a U-shaped structure, such that the second basket body 3 can obtain the maximum volume and the load-bearing of the second basket body 3 can be more stable.

As shown in FIG. 1, the first basket body 2 and the second basket body 3 are surrounded by a seat cloth. Since the seat cloth is soft, the seat cloth can be folded freely when not storing objects. Accordingly, the seat cloth can be folded as the carriage frame 1 is folded, so as to improve the convenience of folding.

Referring to FIGs. 1 and 2, an access opening 21 of the first basket body 2 is arranged on a front side. The first basket body 2 includes a connecting member for opening or closing the access opening 21 of the first basket body 2. The connecting member may be implemented by various types, such as a fastener, a Velcro or a zipper 22. In this embodiment, the zipper 22 is adopted to be the connecting member. No matter what kind of connecting member is used, the connecting member can prevent objects from falling out of the access opening 21. In addition, since the upper side of the first basket body 2 is completely covered by the seat cloth, the aforesaid arrangement can facilitate a user to take and place objects and improve the convenience of the first basket body 2 in use. An access opening 31 of the second basket body 3 is arranged on the upper side. Since there is a large remaining space above the second basket body 3, the aforesaid arrangement can facilitate the user to take and place objects and further improve the convenience of the second basket body 3 in use.

Compared to the prior art, a plurality of basket areas are arranged on the carriage frame 1 of the invention and a plurality of basket bodies are disposed on the basket areas correspondingly, such that the carriage frame 1 has a plurality of independent baskets. Accordingly, one of the baskets may be used to store baby's daily necessities and the other may be used to store food, such as fruits, vegetables and so on, such that the baby's daily necessities can be separated from other objects, so as to avoid mutual contamination and improve hygiene. Furthermore, since different types of objects are placed separately, a required object can be quickly found during use and the convenience of use can be improved.

Moreover, another embodiment of the invention is described in the following. The multi-basket baby carriage 100 includes the carriage frame 1 and three basket bodies, wherein the three basket bodies include a first basket body, a second basket body and a third basket body arranged in front and rear respectively. Three basket areas are arranged under the seat body of the carriage frame 1, wherein the three basket areas includes a first basket area, a second basket area and a third basket area arranged in front and rear respectively. The first basket body is disposed on the first basket area, the second basket body is disposed on the second basket area, and the third basket body is disposed on the third basket area. The first basket body may be connected to the first support tube, the second basket body may be connected to the seat tube, and the third basket body may be connected to the second support tube. Needless to say, parts of the basket bodies may be arranged side by side on the left and right, and the connecting position between the basket body and the carriage frame 1 may also be slightly changed according to the specific position. The effects of these embodiments are the same as those of the first embodiment and the description will not be repeated herein.

The structure of the carriage frame 1 involved in the multi-basket baby carriage 100 is not the focus of the invention and has little relationship with the invention. The structure of the carriage frame 1 is well known by one skilled in the art and therefore will not be described in detail herein.

## Claims

1. A multi-basket baby carriage (100) comprising:
a carriage frame (1), at least two basket areas (11, 12) being arranged under a seat body of the carriage frame (1); and
at least two basket bodies (2, 3) disposed on the at least two basket areas (11, 12) correspondingly and connected to the carriage frame (1),
wherein the at least two basket bodies (2, 3) comprises a first basket body (2) and a second basket body (3) arranged in front and rear respectively, the at least two basket areas (11, 12) comprises a first basket area (11) and a second basket area (12), the first basket body (2) is disposed on the first basket area (11), and the second basket body (3) is disposed on the second basket area (12), and
wherein the carriage frame (1) has two seat tubes (13) on left and right sides of the seat body,
**characterized in that**
a front side of the carriage frame (1) has a first support tube (14) disposed transversely, and the first basket body (2) is connected to the first support tube (14).

2. The multi-basket baby carriage (100) of claim 1 further **characterized in that** the first basket body (2) is connected to the seat tube (13).

3. The multi-basket baby carriage (100) of claim 1 further **characterized in that** the first basket body (2) is hung on the first support tube (14).

4. The multi-basket baby carriage (100) of claim 1 further **characterized in that** a rear side of the carriage frame (1) has a second support tube (15) and the second basket body (3) is connected to the second support tube (15).

5. The multi-basket baby carriage (100) of claim 4 further **characterized in that** the second support tube (15) is a U-shaped structure.

6. The multi-basket baby carriage (100) of claim 4 further **characterized in that** the second basket body (3) is hung on the second support tube (15).

7. The multi-basket baby carriage (100) of claim 1 further **characterized in that** at least one of the first basket body (2) and the second basket body (3) is surrounded by a seat cloth or a mesh fabric.

8. The multi-basket baby carriage (100) of claim 7 further **characterized in that** an access opening (21) of the first basket body (2) is arranged on a front side.

9. The multi-basket baby carriage (100) of claim 8 further **characterized in that** the first basket body (2) comprises a connecting member for opening or closing the access opening (21) of the first basket body (2).

## Patentansprüche

1. Mehrkorb-Kinderwagen (100) umfassend:
einen Wagenrahmen (1), wobei mindestens zwei Korbbereiche (11, 12) unter einem Sitzkörper des Wagenrahmens (1) angeordnet sind; und
mindestens zwei Korbkörper (2, 3), die an den mindestens zwei Korbbereichen (11, 12) entsprechend angeordnet und mit dem Wagenrahmen (1) verbunden sind,
wobei die mindestens zwei Korbkörper (2, 3) einen ersten Korbkörper (2) und einen zweiten Korbkörper (3) aufweisen, die jeweils an der Vorderseite und an der Rückseite angeordnet sind, die mindestens zwei Korbbereiche (11, 12) einen ersten Korbbereich (11) und einen zweiten Korbbereich (12) aufweisen, der erste Korbkörper (2) an dem ersten Korbbereich (11) angeordnet ist und der zweite Korbkörper (3) an dem zweiten Korbbereich (12) angeordnet ist, und
wobei der Wagenrahmen (1) zwei Sitzrohre (13) an linker und rechter Seite des Sitzkörpers aufweist,
**dadurch gekennzeichnet, dass** eine Vorderseite des Wagenrahmens (1) ein erstes Stützrohr (14) aufweist, das quer angeordnet ist, und der erste Korbkörper (2) mit dem ersten Stützrohr (14) verbunden ist.

2. Mehrkorb-Kinderwagen (100) nach Anspruch 1, ferner **dadurch gekennzeichnet, dass** der erste Korbkörper (2) mit dem Sitzrohr (13) verbunden ist.

3. Mehrkorb-Kinderwagen (100) nach Anspruch 1, ferner **dadurch gekennzeichnet, dass** der erste Korbkörper (2) an dem ersten Stützrohr (14) aufgehängt ist.

4. Mehrkorb-Kinderwagen (100) nach Anspruch 1, ferner **dadurch gekennzeichnet, dass** eine Rückseite des Wagenrahmens (1) ein zweites Stützrohr (15) aufweist und der zweite Korbkörper (3) mit dem zweiten Stützrohr (15) verbunden ist.

5. Mehrkorb-Kinderwagen (100) nach Anspruch 4, ferner **dadurch gekennzeichnet, dass** das zweite Stützrohr (15) eine U-förmige Struktur ist.

6. Mehrkorb-Kinderwagen (100) nach Anspruch 4, ferner **dadurch gekennzeichnet, dass** der zweite Korbkörper (3) an dem zweiten Stützrohr (15) aufgehängt ist.

7. Mehrkorb-Kinderwagen (100) nach Anspruch 1, ferner **dadurch gekennzeichnet, dass** mindestens einer von dem ersten Korbkörper (2) und dem zweiten Korbkörper (3) durch ein Sitztuch oder einen Netzstoff umgeben ist.

8. Mehrkorb-Kinderwagen (100) nach Anspruch 7, ferner **dadurch gekennzeichnet, dass** eine Zugangsöffnung (21) des ersten Korbkörpers (2) an einer Vorderseite angeordnet ist.

9. Mehrkorb-Kinderwagen (100) nach Anspruch 8, ferner **dadurch gekennzeichnet, dass** der erste Korbkörper (2) ein Verbindungselement zum Öffnen oder Schließen der Zugangsöffnung (21) des ersten Korbkörpers (2) aufweist.

## Revendications

1. Poussette à paniers multiples (100)
comprenant :
un châssis de poussette (1), au moins deux zones de paniers (11, 12) étant agencées sous un corps de siège du châssis de poussette (1) ; et
au moins deux corps de paniers (2, 3) disposés sur les au moins deux zones de paniers (11, 12) de manière correspondante et reliés au châssis de poussette (1),
dans laquelle les au moins deux corps de paniers (2, 3) comprennent un premier corps de panier (2) et un deuxième corps de panier (3) agencés respectivement à l'avant et à l'arrière, les au moins deux zones de paniers (11, 12) comprennent une première zone de panier (11) et une deuxième zone de panier (12), le premier corps de panier (2) est disposé sur la première zone de panier (11), et le deuxième corps de panier (3) est disposé sur la deuxième zone de panier (12), et
dans laquelle le châssis de poussette (1) a deux tubes de siège (13) sur les côtés gauche et droit du corps de siège,
**caractérisée en ce que**
un côté avant du châssis de poussette (1) a un premier tube de support (14) disposé transversalement, et le premier corps de panier (2) est relié au premier tube de support (14).

2. Poussette à paniers multiples (100) de la revendication 1, **caractérisée en outre en ce que** le premier corps de panier (2) est relié au tube de siège (13).

3. Poussette à paniers multiples (100) de la revendication 1, **caractérisée en outre en ce que** le premier corps de panier (2) est suspendu au premier tube de support (14).

4. Poussette à paniers multiples (100) de la revendication 1, **caractérisée en outre en ce qu'**un côté arrière du châssis de poussette (1) a un deuxième tube de support (15) et le deuxième corps de panier (3) est relié au deuxième tube de support (15).

5. Poussette à paniers multiples (100) de la revendication 4, **caractérisée en outre en ce que** le deuxième tube de support (15) est une structure en forme de U.

6. Poussette à paniers multiples (100) de la revendication 4, **caractérisée en outre en ce que** le deuxième corps de panier (3) est suspendu au deuxième tube de support (15).

7. Poussette à paniers multiples (100) de la revendication 1, **caractérisée en outre en ce qu'**au moins l'un parmi le premier corps de panier (2) et le deuxième corps de panier (3) est entouré d'un tissu de siège ou d'un tissu à mailles.

8. Poussette à paniers multiples (100) de la revendication 7, **caractérisée en outre en ce qu'**une ouverture d'accès (21) du premier corps de panier (2) est agencée sur un côté avant.

9. Poussette à paniers multiples (100) de la revendication 8, **caractérisée en outre en ce que** le premier corps de panier (2) comprend un élément de liaison pour ouvrir ou fermer l'ouverture d'accès (21) du premier corps de panier (2).
